# EUROPEAN PATENT APPLICATION

(11) **EP 2 508 452 A1**
(43) Date of publication of application: **10.10.2012**
(21) Application number: 11161077.0
(22) Date of filing: 04.04.2011
(51) Int. Cl.: B65G 47/90, B65G 57/24, B65G 61/00

(54) **Palletizing device and method**

(71) Applicant: Elettric 80 S.p.A., 42030 Viano, Reggio Emilia (IT)
(72) Inventor: Casarini, Marco, 42030, Viano (Reggio Emilia) (IT); Marzani, Roberto, 42030, Viano (Reggio Emilia) (IT)
(74) Representative: Feltrinelli, Secondo Andrea

(57) **Abstract**

A palletizing device equipped with at least one gripper (2) and a support base for an organised group of products, the gripper (2) comprising a support (5), able to be connected to a robotic palletizing arm and similar, and at least two gripping elements (7) associated with the support (5) on opposite sides and mobile at least from open positions to closed positions in which they lift the organised group of products. The gripper (2) also comprises a compacting apparatus (9) associated with the support (5) and mobile from an open position towards a compacting position in which the apparatus wraps around the organised group of products so as to make an optimal configuration to be picked up by the elements (7), the gripping elements (7) comprising crossbars (16) that insert under the organised group of products, allowing particularly delicate treatment of the products. A palletizing process is also presented.

## Description

### "TECHNICAL FIELD OF THE INVENTION"

The present invention concerns a palletizing device and process.

More specifically, the present invention concerns a palletizing device suitable for manipulating groups of products of various kinds intended to constitute layers on support means such as pallets and the like, to then be sent to storage and sales points.

The present invention also concerns a process for palletizing products of various kinds.

### STATE OF THE ART

In various fields of production such as the paper industry, also known as "tissue" industry, or the bottled products industry, the so-called "beverage" industry, but also in other fields, the products or the multi-packs of products are arranged on support means such as pallets and the like, for storage, stowing and/or transportation purposes.

In some cases, moreover, the packs of products are directly placed on sale on the pallets themselves.

On the products production or packaging lines, whatever kind of products they may be, the packs or the bundles are transported, for example on roller means, to collection areas in which they are arranged in an organised manner alongside one another so as to form groups, of predetermined dimensions in relation to the storage and transportation requirements.

Such groups are then picked up one by one and then arranged layered with one pallet or similar on top of the other. The complete pallet, thus made, is then stored or else transported to the sales points. In known production plants, the groups of packs are usually picked up and then deposited on pallets by palletizing robots, either anthropomorphous or of another type, equipped with gripper means that grasp the groups of products at the side and arrange them in successive layers on the pallet.

The known gripper means mounted on the palletizing robots mounted on the palletizing robots currently widely used in the various production sectors are not however able to ensure satisfactory results from various points of view.

Firstly, the conventional gripper means allow groups comprising a limited number of products or packs of products to be manipulated. In particular, as such a number of products or packs of products increases, the risk that the grip of the gripper means not being secure increases, and resulting in a higher risk of one or more products or packs being able to fall during the step of creating the layers on the pallets.

Moreover, conventional gripper means are unable to ensure that the precise arrangement of the products or of the pack carried out upstream of the step of creating the layers is then actually maintained on the pallet. In other words, it is possible for some packs to accidentally move during the step of depositing on the pallet, causing layering of irregular shape and size and/or characterised by unstable conditions.

The same groups of products or packs, made at the collection areas of the production lines, are often organised imprecisely and in an approximate manner, particularly in the case in which the products or the packs of products dealt with are not completely rigid, like for example packs of rolls of paper, or similar: this fact makes it difficult for the gripping means to take a grip and also to subsequently deposit them on the pallet.

Moreover, conventional gripping means do not ensure effective results in particular if used with quite delicate products like, indeed, packs of paper products - rolls, tissues, and the like, since the clamping action of the gripping means to grasp the groups of packs can cause damage, deformations, or in any case other unwanted and disadvantageous consequences from the point of view of storage and transportation.

### PURPOSES OF THE INVENTION

The technical task of the present invention is therefore to improve the state of the art, by providing a palletizing device that allows the aforementioned drawbacks to be eliminated.

In such a technical task, a purpose of the present invention is to make a palletizing device that allows groups consisting of a relatively large number of products or packs of products, even of relatively large dimensions, to be safely and effectively manipulated.

Another purpose of the present invention is to provide a palletizing device that allows delicate and easily-damaged or deformed groups of products or packs to be manipulated.

Yet another purpose of the present invention is to provide a palletizing process that makes it possible to effectively and reliably make layers of groups of products of large dimensions, or in large numbers or else that are delicate and easily damaged or deformed.

Such a technical task and such a purpose are accomplished by a palletizing device according to the attached claim 1, and by a palletizing process according to the attached claim 21.

The palletizing device advantageously comprises a gripper equipped with compacting means that clamp onto the sides of the groups of products during the pick-up step, together with gripping elements having lower portions that insert under the groups of products to lift them.

In this way, the lifting no longer occurs by friction on the sides of the groups of products, but rather by simple lifting of groups kept in correct position by the compacting means.

Thanks to this provision delicate or unstable products can be handled, even in large numbers for each group.

A support base for the organised group of products is also foreseen that is equipped with mobile rollers that lower, with respect to each organised group of products, by a height such as to allow the insertion, under them, of the lower portions of the gripping elements.

Further advantageous characteristics are described in the dependent claims.

### BRIEF DESCRIPTION OF THE DRAWINGS

The characteristics of the invention will become clearer to any man skilled in the art from the following description and from the attached tables of drawings, given as a non-limiting example, in which:
Figure 1 is a detailed side view of the palletizing device according to the present invention;
Figure 2 is a front view of the gripper of the device;
Figure 3 is a side view of the same gripper;
Figure 4 is a perspective view of the gripper with the gripping elements and the compacting means in open position;
Figure 5 is a perspective view of the same gripper with the gripping elements and the compacting means in closed position;
Figure 6 is a side view of the support base of the device, with the rollers in upper position;
Figure 7 is a perspective view of the support base with the rollers in lower position.

### EMBODIMENTS OF THE INVENTION

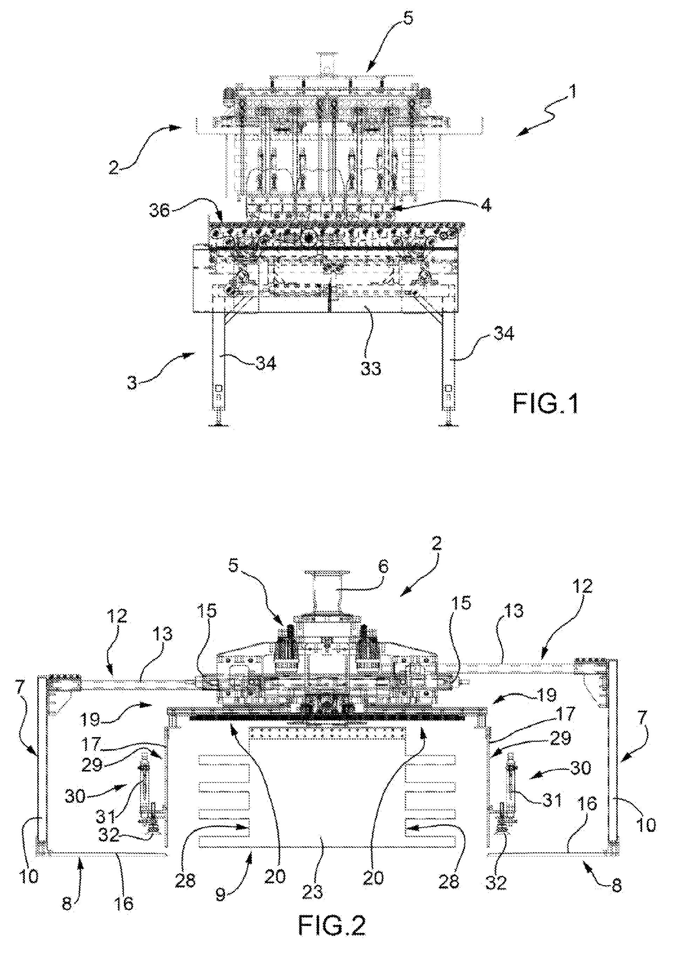

With reference to the attached figure 1, a palletizing device according to the present invention is wholly indicated with 1.

The palletizing device described hereafter can be foreseen, for example, in any line or plant for producing and/or packaging products of various kinds in which groups of products, or else groups of multi-packs of products, or similar, must be arranged in stacked layers on support means such as pallets or similar.

The arrangement in layers on pallets and the like can be carried out, for example, in order to store and stow the products, or else in order to transport them, or even to place them directly on sale at the distribution point, or for any other requirement mainly of the logistical kind.

In the rest of the description, by the expression group or groups of products we indicate organised group or groups of packaged products, or else organised group or groups of multi-packs of products. For example, each group of products to which we refer in the present description can consist of a group of packs of paper products such as rolls and the like, or else a group of bundles of bottled products, or else a group of cartoned products, or even a group of products or packs of products of any other kind, and suitable for being stored in layers on pallets.

Moreover, by organised group of products we mean a group of products or packs of products arranged side-by-side, according to a predetermined arrangement or else according to preset configurations, so as to optimise the ratio between the available surface and the number of products and packs of products and to substantially define a layer of the pallet being formed.

Usually, such a predetermined arrangement foresees making an organised group of products that in plan has a substantially square or rectangular bulk.

In any case, the organised group of products can also have a different shape in plan.

Figure 1 represents a detailed side view of the palletizing device according to the present invention.

The palletizing device 1 according to the present invention comprises a gripper, wholly indicated with 2.

The device 1 also comprises a support base, wholly indicated with 3, for the groups of products that must be picked up by the gripper 2.

In figure 1 the organised group of products is indicated with 4 and is substantially parallelepiped shaped.

The dimensions and the proportions of the organised group of products 4 represented in figure 1 are however absolutely for indicating and not limiting purposes.

The gripper 2 comprises a support 5, able to be connected to a robotic palletizing arm and similar, not represented in the figures.

The support 5 is substantially rectangular in shape and is provided, at the top, with a shank 6 for coupling with a robot, through known means that are not represented in the figures.

In greater detail, the shank 6 allows the gripper 2 to be coupled for example with the arm of an anthropomorphous robot, or else with a robot of another kind, like a cartesian robot or similar.

The gripper 2 comprises at least two gripping elements 7.

The gripping elements 7 are associated with the support 5 on opposite sides and are mobile at least from respective open positions to respective closed positions in which they are suitable for lifting the organised group of products 4, as will be made clearer in the rest of the description.

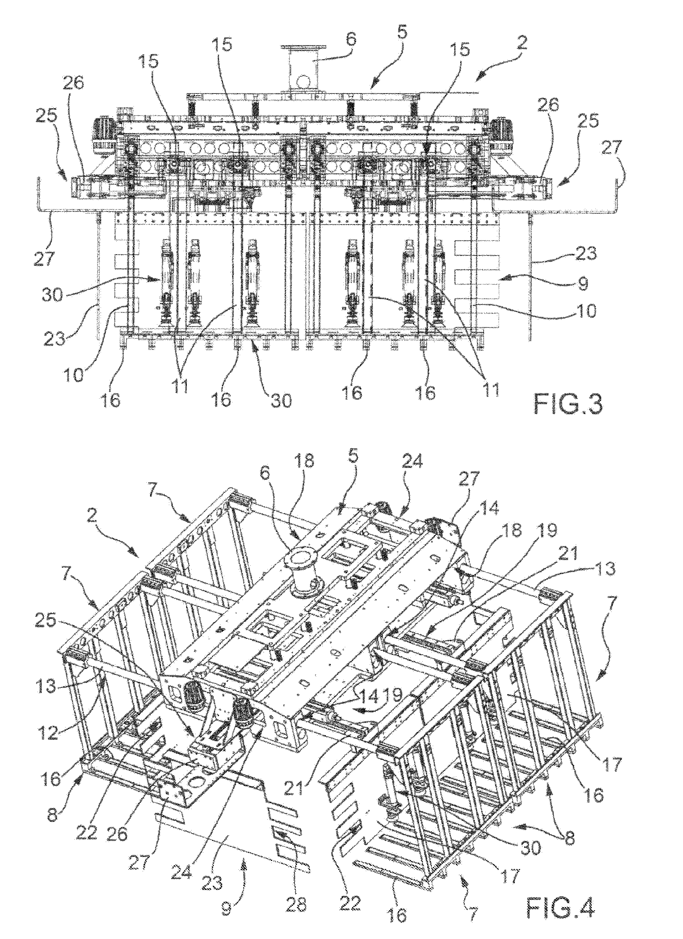

In greater detail, as illustrated in figures 3, 4, 5, the gripper 2 comprises four gripping elements 7, two per side with respect to the support 5, i.e. in opposing sets of two.

As will become clearer hereafter, the gripping elements 7 comprise respective lower portion, wholly indicated with 8, suitable for inserting under the organised group of products 4, obtaining the important technical advantages described hereafter. The gripper 2 also comprises compacting means, wholly indicated with 9, which are used to compact the organised group of products 4.

The compacting means 9 are associated with the support 5 of the gripper 2, and are mobile at least from respective open positions to respective compacting positions, in which they wrap around the organised group of products 4 so as to make an optimal configuration to be subsequently picked up by the elements 7, as will be made clearer hereafter. The compacting means 9 are arranged between the gripping elements 2, according to what is illustrated in figures 2, 4, 5.

Each gripping elements 7 of the gripper 2 comprises a frame structure 10 with central reinforcing uprights 11.

Each gripping element 7 is associated with respective linear actuation means, wholly indicated with 12, which control the movement of each gripping element 7 from the respective open position to the respective closed position, and vice-versa.

More specifically, the linear actuation means 12 are suitable for translating the gripping elements 7 along respective directions: the gripping elements 7 facing one another are actuated to translate along the same direction, as will be made clearer hereafter.

The linear actuation means 12 of each gripping element 7 comprise two parallel stems 13 fixed, with the respective ends, to the upper vertices of the frame structure 10, substantially perpendicular to the plane defined by the latter.

The stems 13 are able to slide inside respective linear guide channels 14, foreseen in the support 5. The linear actuation means 12 comprise, for each gripping element 7, a servo-pneumatic positioning system that is able to actuate each element 7 in relation to certain preset instructions and, in particular, relating to the positioning of each element 7 and to the force exerted.

In greater detail, the servo-pneumatic positioning system comprises, for example, an electronic controller, slaved to the unit for managing and controlling the operation of the robot on which the gripper 2 is mounted, of the type known in the field and not represented in the figures. The electronic controller in turn has a proportional pneumatic valve, of the known type, operatively associated with it, which controls the operation of a respective linear pneumatic actuator 15, also of the known type, associated with the stems 13 of each gripping element 7.

The system also comprises sensors that detect the position of the stem of the linear pneumatic actuator 15, as well as pressure sensors to detect the force exerted, and that are part of a feedback control system, or similar.

Alternatively, the linear actuation means 12 can comprise a servo-pneumatic positioning system, like the one described above or in any case substantially equivalent from the operational point of view, for each pair of gripping elements 7 - i.e. those in opposing sets of two - or else a single system for all of the gripping elements 7 of the gripper 2.

As will be made clearer hereafter, each servo-pneumatic positioning system makes it possible to control the movement over time, and therefore the final positioning, of each linear pneumatic actuator 15 of each gripping element 7 with precision of the order of tenths of a millimetre.

Moreover, each servo-pneumatic positioning system makes it possible to precisely control the force exerted by each actuator 15, so as to manipulate each organised group of products 4 according to the desired ways, which will be described hereafter.

The lower portion 8 of each gripping element 7 comprises a respective group of parallel crossbars 16, arranged substantially like a comb, the function of which will become clear hereafter.

The crossbars 16 have a relatively thin thickness with respect to the other dimensions of length and width so as to be able to be easily inserted even in narrow spaces, and moreover the crossbars 16 are also quite rigid so as not to bend much even if loaded with heavy weights. For example, the crossbars 16 can be made from carbon fibre in a matrix of resin or another advanced composite material with high modulus of elasticity.

The compacting means 9 comprise four opposite first mobile walls 17, suitable for wrapping around the organised group of products 4 at its opposite sides. The first mobile walls 17 are associated, in pairs, with two first sides 18 of the support 5, and they are preferably made from a rigid and light material. In particular, the aforementioned first sides 18 are, in the represented embodiment, the long sides of the support 5.

The first walls 17 are associated with respective first translation means, wholly indicated with 19, along a first direction.

The first translation means 19 of the first walls 17 comprise first pneumatic actuators 20.

In greater detail, four first pneumatic actuators 20 are foreseen, mounted in pairs along the first sides 18 of the support 5, with respective axes perpendicular to the first sides themselves 18.

The four first walls 17 are connected to the respective four first pneumatic actuators 20 through first brackets 21.

The four first walls 17 are also engaged, along their most outer sides, by first substantially rectangular recesses 22, regularly spaced apart.

The first translation means 19 of the first walls 17 also comprise, for each of the first pneumatic actuators 20, a respective servo-pneumatic positioning system - substantially analogous to the one described earlier for the linear actuation means 12 - which is able to actuate each first actuator 20, and therefore each first wall 17, in relation to certain preset instructions and relating, in particular, to the positioning and to the force exerted on the organised group of products 4, and which will in any case be made clearer hereafter. Alternatively, a single servo-pneumatic positioning system can be foreseen for each pair of first pneumatic actuators 20, i.e. for each pair of first walls 17, in side-by-side sets of two.

The compacting means 9 also comprise two opposite second mobile walls 23.

The second walls 23 are associated with two second sides 24 of the support 5, and are also preferably made from rigid and light material.

In particular, the aforementioned second sides 24 are the short sides of the support 5, perpendicular to the first sides 18.

Moreover, the second mobile walls 23 are associated with respective second translation means, wholly indicated with 25, along a second direction.

The first direction of translation of the first walls 17 is substantially perpendicular to the second direction of translation of the second walls 23.

The second translation means 25 of the two second mobile walls 23 respectively comprise two second pneumatic actuators 26.

In greater detail, two second pneumatic actuators 26 are foreseen mounted along the second sides 24 of the support 5, with respective axes perpendicular to the second sides themselves 24.

The two second mobile walls 23 are connected to the respective two second pneumatic actuators 26 through second brackets 27.

The two second walls 23 are engaged, along their most outer sides, by second substantially rectangular recesses 28, regularly spaced apart.

The second recesses 28 of the second mobile walls 23 are arranged offset with respect to the first recesses 22 of the first mobile walls 17.

The second translation means 25 of the second walls 23 also comprise, for each of the second pneumatic actuators 26, a respective servo-pneumatic positioning system - substantially analogous to the one described earlier for the linear actuation means 12 and for the first translation means 19 - which is able to actuate each second actuator 26, and therefore each second wall 23, in relation to certain preset instructions and relating, in particular, to the positioning and to the force exerted on the organised group of products 4, and which will in any case be made clearer hereafter. Alternatively, a single servo-pneumatic positioning system can be foreseen for each pair of second pneumatic actuators 26, i.e., for each pair of second walls 23, in side-by-side sets of two.

The servo-pneumatic positioning systems of the first translation means 19 and of the second translation means 25 are, in turn, operatively connected to the control and management unit of the operation of the robot on which the gripper 2 is mounted.

On the outer surfaces 29 of the first walls 17 there are means 30 for picking up sheets, to be arranged between the various organised groups of products 4 that make up a pallet, in a per se known way in the industry.

The sheets can, for example, be made from material of the cardboard type or similar.

The pick-up means 30 comprise, for each of the outer surfaces 29 of the first walls 17, one or more pneumatic pistons 31, fixed to the first walls 17 themselves, and equipped with respective gripping members 32.

The gripping members 32 are for example of the suction cup type, or similar.

The gripping members 32 are suitable for adhering to the surface of the sheet to be picked up so as to hold onto it and lift it, according to ways and criteria that will be made clearer hereafter.

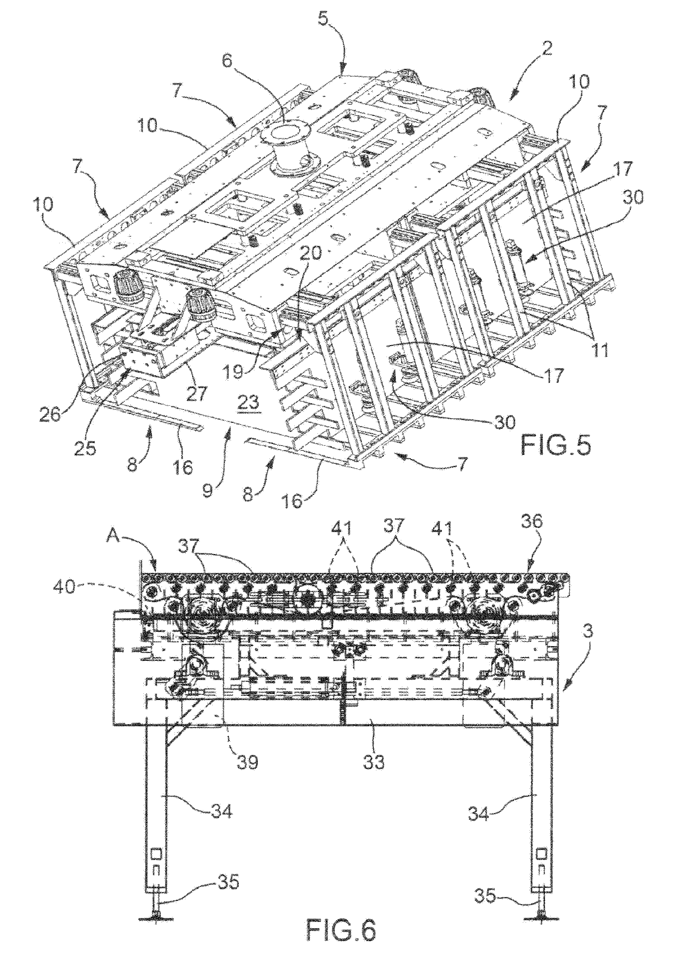

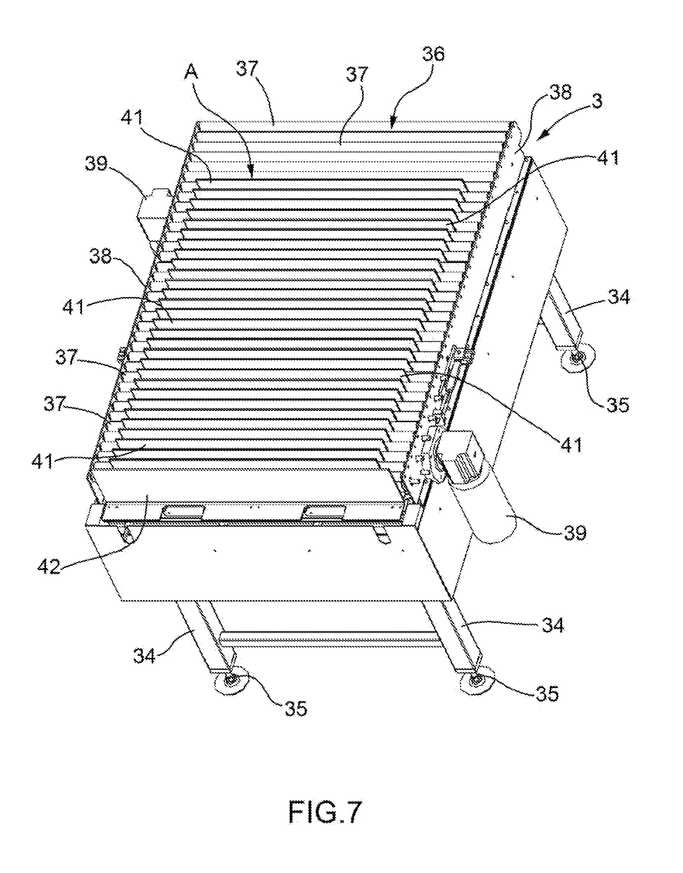

The pistons 31 are fixed to the first walls 17 in offset position with respect to the crossbars 16 of the gripping elements 7, as can be seen for example in figure 3. In this way, therefore, the gripping elements 32 can freely insert between the shafts 16 to pick up the sheets. The support base 3 of the groups of products 4, intended to be picked up by the gripper 2, is represented in detail in figures 6, 7.

The support base 3 has a structure totally similar to that of conventional roller conveyors.

The support base 3 comprises a frame 33, supported by four legs 34 with adjustable feet 35.

The frame 33 defines on the top a transportation surface 36 of the groups of products 4 are the top. The transportation surface 36 is defined by a plurality of parallel rollers 37, supported at the respective ends by two opposite side walls 38 fixedly connected to the frame 33.

The transportation rollers 37 of the groups of products 4 are associated with respective actuation means 39.

The actuation means 39 of the rollers 37 comprise at least one electric gear motor group, with which the rollers 37 are associated through transmission means 40 that are *per se* known in the industry.

For example, the transmission means 40 can be of the type using a belt, chain, gearwheel, or other equivalent devices.

The support base 3 also comprises a support surface A for the organised groups of products 4.

The support surface A is defined by ribs 41 arranged vertical and parallel, having a relatively thin thickness.

The ribs 41 can, for example, be mounted on a single support plate, or else they can be mounted on a plurality of distinct and separate support plates or elements.

As illustrated in figure 6, the ribs 41 are mounted so as to be offset, in the direction of forward movement of the organised group of products 4, with respect to the rollers 37. The support base 3 for the organised group of products 4 comprises selective vertical translation means of the rollers 37 under the support surface A defined by the ribs 41, to allow the insertion of the lower portions 8 of the gripping elements 2.

Through the aforementioned vertical translation means, indeed, the rollers 37 are selectively commanded to move from at least one lower position, illustrated in figure 7, in which they are under the support surface A defined by the ribs 41, and in which therefore the lower portions 8 of the gripping elements 2 can insert between the ribs 41 themselves under each organised group of products 4, to at least one upper position, illustrated in figure 6, in which on the other hand the rollers 37 are positioned at a greater height with respect to the support surface A, so as to define the aforementioned transportation surface 36, on which the organised groups of products are moved according to the direction of forward movement.

The vertical translation means of the rollers 37 comprise at least one actuator - for example electric or pneumatic - associated for example with the side walls 38 for supporting the rollers 37, and which carries out the translation thereof from the aforementioned lower position to the aforementioned upper position and vice-versa.

The frame 33 of the support base 3 also comprises an end wall 42 for stopping the groups of products.

In an alternative embodiment of the support base 3 - not represented in the figures - the rollers 37 are rotatably supported in a fixed and predetermined position, whereas the ribs 41 are associated with respective vertical translation means - consisting for example of an electric, pneumatic or similar actuator. Such translation means allow the ribs 41 themselves to be lifted from an inactive lower position, in which they are under the support surface 36, to an upper position in which they lift each organised group of products 4 to allow the insertion of the lower portions 8 of the gripping elements 2 between them.

Hereafter we will describe the process for palletizing groups of products 4 able to be carried out with the palletizing device 1 described above, i.e. the operation of the device in making a pallet comprising groups of products 4 arranged on top of one another.

In an initial step, an organised group of products 4 to be palletized is positioned on the support base 3, i.e. at the end part of the transportation surface 36.

The dimensions of each organised group of products 4 are known, and they have been preset into the programme that manages the operation of the robot that incorporates the gripper 2, according to ways essentially known in the industry.

The gripper 2 initially has the compacting means 9 and the gripping elements 7 both in the respective open positions, i.e. in the configuration illustrated in figures 2 and 4.

At this moment, or even at a later time, the vertical translation means of the rollers 37 are actuated, which thus lower by a certain height - i.e. below the support surface A defined by the ribs 41 - that is sufficient to allow the insertion, under the organised group of products 4 itself, of the crossbars 16 of the respective gripping elements 7. The gripper 2 is then brought up to the organised group of products 4, so that the crossbars 16 of the gripping elements 7 insert between the ribs 37 of the support base 3.

At this point, there follows a step of actuating the compacting means 9.

In greater detail, the first walls 17 and the second walls 23 are actuated, respectively, through the first translation means 19 and the second translation means 25.

The first walls 17 and the second walls 23 then translate towards the organised group of products 4; the servo-pneumatic positioning systems of the first translation means 19 and of the second translation means 25 indeed take care of bringing the first walls 17 and the second walls 23 in contact with the respective side surfaces of the organised group of products 4, so as to obtain a light pressing action that is sufficient to compact the single products into the optimal configuration, without however the risk of deformations or damages. Thanks to the presence of the first recesses 22 and of the second recesses 28 offset from one another, the first walls 17 and the second walls 23 can cross over one another so as to wrap around groups of products 4 even of very different dimensions.

At this point, therefore, the organised group of products 4 is compacted and delicately gripped on the sides by the first walls 17 and by the second walls 23, and thus any accidental movement or displacement is prevented.

Then there is a step of actuating the gripping elements 7, again in relation to the dimensions of the organised group of products 4, known and introduced into the management programme of the robot.

In particular, the gripping elements 7 are actuated by the linear actuation means 12 so as to come close to the sides of the organised group of products 4, and so that the crossbars 16 of the lower portions 8 insert under the organised group of products 4 itself.

The movement of the gripping elements 7 is carried out, thanks to the characteristics of the servo-pneumatic positioning system of the linear actuation means 12, so as not to exert pressure on the sides of the organised group of products 4, already effectively held by the compacting means 9.

This configuration of the gripper 7 is represented in figure 5.

At this point there is a step of lifting the gripper 2, which carries the organised group of products 4 with it.

The gripper 2, actuated by the palletizing robot, then goes up to a palletizing station, where it releases the organised group of products 4. For example, in the palletizing station there is a pallet on which the first organised group of products 4 is laid down.

The release of the organised group of products 4 takes place by firstly moving away the gripping elements 7, and then by moving away the first walls 17 and the second walls 23.

The process is obviously repeated for as many cycles as there are layers to be made in the pallet.

In an alternating manner with the pick-up and release of the organised group of products 4 as described above, the gripper 2 also takes care of collecting, through the pick-up means 30, sheets from a suitable store and of depositing them, one by one, between one group and the other in the formation of a pallet.

The invention thus conceived allows important technical advantages to be obtained.

Firstly, the device according to the invention makes it possible to create layers of groups of products that are more regular and more stable thanks to the fact that every layer is held by the compacting means during the transportation from the support base to the palletizing station.

Moreover, the pick-up step of the groups of products takes place so as to eliminate the risks of damaging or deforming the products. Indeed, the picking up of a group of products does not occur, like in the case of conventional grippers, mainly by friction of the gripping elements on the sides of the group of products. Instead, picking up occurs by simple lifting of an organised group of products immobilized by the compacting means, without any pressure action on the sides of the products.

The palletizing device according to the invention also makes it possible to pick-up and to create layers with groups of products of even relatively large dimensions, or even relatively heavy, since such groups are supported at the bottom by the crossbars of the gripping elements.

The device according to the invention also makes it possible to create layers of groups of products, or of packs of products, that are delicate or easily damaged, unstable and easily subject to accidental movements or deformations during storage or transportation.

Moreover, it is possible to create layers of even non-homogeneous groups of products, for example of different kinds, since the compacting means allow cohesive, low-bulk and sufficiently stable layers to be made.

It has thus been seen how the invention achieves the proposed purposes.

The present invention has been described according to preferred embodiments, but equivalent variants can be devised without departing from the scope of protection offered by the following claims.

## Claims

1. Palletizing device provided with at least one gripper (2) and at least one support base (3) for an organised group of products (4) that substantially define a layer of the pallet being formed, said gripper (2) comprising a support (5), able to be connected to a robotic palletizing arm and similar, and at least two gripping elements (7) associated with said support (5) on opposite sides and mobile at least from respective open positions to respective closed positions in which they are suitable for lifting the organised group of products (4), **characterised in that** said gripper (2) comprises compacting means (9) associated with said support (5) and mobile at least from respective open positions to respective compacting positions in which they wrap around the organised group of products (4) so as to make an optimal configuration to be picked up by said gripping elements (7), said gripping elements (7) comprising respective lower portions (8) suitable for inserting under the organised group of products (4).

2. Device according to claim 1 or 2, wherein said compacting means (9) are arranged between said gripping elements (7).

3. Device according to any one of the previous claims, wherein said compacting means (9) comprise opposite first mobile walls (17) foreseen at first sides (18) of said support (5).

4. Device according to the previous claim, wherein said compacting means (9) comprise opposite second mobile walls (23) foreseen at second sides (24) of said support (5).

5. Device according to any one of the previous claims, wherein said first mobile walls (17) and said second mobile walls (23) are associated with respective first translation means (19) and second translation means (25) along a first direction and along a second direction, respectively.

6. Device according to the previous claim, wherein said first direction is substantially perpendicular to said second direction.

7. Device according to one of the previous claims, wherein said first translation means (19) and said second translation means (25) respectively comprise first pneumatic actuators (20) and second pneumatic actuators (26).

8. Device according to the previous claim, wherein said first translation means (19) and said second translation means (25) comprise respective servo-pneumatic positioning systems of said first pneumatic actuators (20) and of said second pneumatic actuators (26).

9. Device according to one of the previous claims, wherein said gripping elements (7) are associated with respective linear actuation means (12) along the same direction.

10. Device according to the previous claim, wherein said linear actuation means (12) comprise servo-pneumatic positioning systems of said gripping elements (7).

11. Device according to one of the previous claims, wherein said lower portions (8) of said gripping elements (7) comprise respective groups of parallel crossbars (16) arranged substantially like a comb.

12. Device according to the previous claim, wherein said crossbars (16) have a relatively thin thickness with respect to the other dimensions of length and width so as to be able to be easily inserted even in narrow spaces.

13. Device according to claim 11 or 12, wherein said crossbars (16) are made from carbon fibres in a matrix of resin or another advanced composite material with high modulus of elasticity.

14. Device according to one of the previous claims, wherein said support base (3) comprises rollers (37) for transporting groups of products (4), associated with respective actuation means (39), and a support surface (A) of the groups of products (4).

15. Device according to claim 14, comprising vertical translation means of said rollers (37) from at least one lower position, in which said rollers (37) are at a lower height with respect to said support surface (A) so as to allow the insertion of said lower portions (8) of said gripping elements (2), to at least one upper position, in which said rollers (37) are at a greater height with respect to said support surface (A).

16. Device according to the previous claim, wherein said support base (3) comprises a plurality of substantially vertical and parallel ribs (41) defining said support surface (A) of the organised groups of products (4), said ribs (41) being arranged offset, in the direction of forward motion of the organised groups of products (4), with respect to said rollers (37), so as to allow the insertion of said lower portions (8) of said gripping elements (2) between them.

17. Device according to one of the previous claims, comprising pick-up means (30) for sheets to be arranged between stacked organised group of products (4).

18. Device according to the previous claim, wherein said pick-up means (30) comprise pneumatic pistons (21), equipped with respective gripping members (32), fixed to the respective outer surfaces (29) of said first walls (31).

19. Gripper (2) for a palletizing device comprising a support (5), able to be connected to a robotic palletizing arm and similar, and at least two gripping elements (7) associated with said support (5) on opposite sides and mobile at least from respective open positions to respective closed positions in which they are suitable for lifting the organised group of products (4), **characterised in that** it comprises compacting means (9) associated with said support (5) and mobile at least from respective open positions to respective compacting positions in which they wrap around the organised group of products (4) so as to make an optimal configuration to be picked up by said elements (7), said gripping elements (7) comprising respective lower portions (8) suitable for inserting under said organised group of products (4).

20. Support base (3) of groups of products (4) for a palletizing device, comprising a plurality of rollers (37) and a support surface (A) of the organised groups of products (4), **characterised in that** it comprises vertical translation means of said rollers (37) under said support surface (A) to allow the insertion of said lower portions (8) of said gripping elements (2).

21. Support base (3) according to the previous claim, comprising a plurality of ribs (41) defining said support surface (A), said ribs (41) being arranged offset, in the direction of forward motion of the organised groups of products (4), with respect to said rollers (37).

22. Process for palletizing groups of products of various kinds, able to be carried out with a palletizing device comprising a gripper (2) equipped with a support (5) with which at least two gripping elements (7) are associated, equipped with respective lower portions (8) and with compacting means (9) of an organised group of products (4) of known dimensions, **characterised in that** it comprises the steps of:
- compacting the organised group of products (4) through the compacting means (9) in relation to the known dimensions of said organised group of products (4), so as to wrap around the sides of the organised group of products (4);
- actuating said gripping elements (7) in relation to the known dimensions of the organised group of products (4), so that the respective lower portions (8) insert under the group (4);
- lifting said gripper (2) with an organised group of products (4);
- releasing the organised group of products (4) in a palletizing station.

23. Process according to the previous claim, wherein said lower portions (8) of said gripping elements (7) comprise respective groups of parallel crossbars (16) arranged substantially like a comb.

24. Process according to the previous claim, wherein said palletizing device comprises a support base (3) equipped with rollers (37), with a support surface (A) of the groups of products (4) and with vertical translation means of said rollers (37) under said support surface (A) to allow the insertion of said lower portions (8) of said gripping elements (2).

25. Process according to the previous claim, comprising a plurality of ribs (41) defining said support surface (A), said ribs (41) being arranged offset, in the direction of forward motion of the organised groups of products (4), with respect to said rollers (37), so as to allow the insertion of said crossbars (16) of said gripping elements (7) between them.

26. Process according to the previous claim, comprising a step of lowering said rollers (37) from an upper position to a lower position, situated below said support surface (A), which allows the insertion of said crossbars (16) between said ribs (41).
